(19) **Europäisches Patentamt / European Patent Office / Office européen des brevets**

(11) **EP 2 005 668 B1**

(12) **FASCICULE DE BREVET EUROPEEN**

(45) Date de publication et mention de la délivrance du brevet:
**29.12.2010   Bulletin 2010/52**

(21) Numéro de dépôt: **07731678.4**

(22) Date de dépôt: **01.03.2007**

(51) Int Cl.:
**H04L 12/56** *(2006.01)*      **H04L 12/28** *(2006.01)*

(86) Numéro de dépôt international:
**PCT/FR2007/050861**

(87) Numéro de publication internationale:
**WO 2007/099263 (07.09.2007 Gazette 2007/36)**

(54) **PROCEDE DE ROUTAGE DANS UN RESEAU AD HOC**

ROUTING-VERFAHREN IN EINEM AD-HOC-NETZWERK

ROUTING METHOD IN AN AD HOC NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **03.03.2006  FR 0650755**

(43) Date de publication de la demande:
**24.12.2008   Bulletin 2008/52**

(73) Titulaire: **FRANCE TELECOM**
**75015 Paris (FR)**

(72) Inventeurs:
- **VU DUONG, Thang**
  **F-22300 Ploulec'h (FR)**
- **KETTAF, Noureddine**
  **F-69100 Villeurbanne (FR)**
- **HAFID, Abouaissa**
  **F-68000 Colmar (FR)**
- **LORENZ, Pascal**
  **F-68770 Ammerschwihr (FR)**

(56) Documents cités:
- **YUAN SUN, ELIZABETH M. BELDING-ROYER, XIA GAO, JAMES KEMPF: "A Priority-based Distributed Call Admission Protocol for Multi-hop Wireless Ad hoc Networks" DEPARTMENT OF COMPUTER SCIENCE, UNIVERSITY OF CALIFORNIA, [Online] juillet 2004 (2004-07), pages 1-15, XP002403934 Santa Barbara Extrait de l'Internet: URL:http://www.cs.ucsb.edu/ research/tech_r eports/reports/2004-20.pdf> [extrait le 2006-10-20]**

- **LEI CHEN ET AL: "QoS-aware routing based on bandwidth estimation for mobile ad hoc networks" IEEE JOURNAL ON SELECTED AREAS IN COMMUNICATIONS, IEEE SERVICE CENTER, PISCATAWAY, NJ, US, vol. 23, no. 3, mars 2005 (2005-03), pages 561-572, XP002379085 ISSN: 0733-8716**

- **BAMERKEE M DAS S K ED - INSTITUTE OF ELECTRICAL AND ELECTRONICS ENGINEERS: "MODERN: MULTICAST ON-DEMAND QOS-BASED ROUTING IN WIRELESS NETWORKS" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY : IEEE, US, vol. VOL. 3 OF 4. CONF. 53, 6 mai 2001 (2001-05-06), pages 2167-2171, XP001082527 ISBN: 0-7803-6728-6**

- **QI XUE, AURA GANZ: "Ad hoc QoS on-demand routing (AQOR) in mobile ad hoc networks" JOURNAL OF PARALLEL AND DISTRIBUTED COMPUTING, [Online] vol. 62, no. 2, février 2003 (2003-02), pages 154-165, XP002403935 Extrait de l'Internet: URL:http://www.sciencedirect.com/ science?_ ob=MImg&_imagekey=B6WKJ-48BBYH7-2-3R&_cdi= 6908&_user=987766&_ orig=search&_coverDate= 02%2F28%2F2003&_ qd=1&_sk=999369997&view=c& _alid=471558421&_rdoc=1&wchp=dGLbVtb-zSkWb &md5=cafaa570c0887f1d43d65ce6c6379452&ie =/ sdarticle.pdf> [extrait le 2006-10-20] cité dans la demande**

- **CHARLES E PERKINS NOKIA RESEARCH CENTER ELIZABETH M BELDING-ROYER UNIVERSITY OF CALIFORNIA ET AL: "Ad hoc On-Demand Distance Vector (AODV) Routing draft-ietf-manet-aodv-13.txt" IETF STANDARD-WORKING-DRAFT, INTERNET ENGINEERING TASK FORCE, IETF, CH, vol. manet, no. 13, 17 février 2003 (2003-02-17), XP015002579 ISSN: 0000-0004 cité dans la demande**

**Description**

La présente invention concerne un procédé de routage dans un réseau ad hoc entre un noeud-source et un noeud-destinataire.

L'invention trouve une application avantageuse dans le domaine général des réseaux ad hoc et, plus spécialement, dans l'évaluation et la réservation de ressources sur de tels réseaux, afin de garantir la qualité de service (QoS) de bout en bout entre le noeud-source et le noeud-destinataire.

Les réseaux ad hoc sont des réseaux sans fil, mobiles et spontanés, ne nécessitant la présence d'aucune infrastructure fixe et capables de s'organiser dynamiquement sans intervention des utilisateurs. La simple présence de terminaux équipés d'une interface radio, qu'il s'agisse de micro-ordinateurs, d'assistants personnels, de dispositifs embarqués dans des véhicules ou encore de capteurs, suffit pour créer un réseau ad hoc.

Dans un réseau mobile ad hoc, constitué de stations munies d'une interface de communication radio, un noeud du réseau peut communiquer directement avec ses voisins, c'est à dire ceux qui sont à portée de sa propre interface, et fait office de routeur pour les autres mobiles du réseau. Ce type de réseau est utile quand aucune connexion filaire n'est disponible, par exemple lors d'une conférence, d'interventions sur le site d'une catastrophe, de visites d'un musée, et plus généralement quand le déploiement rapide d'un réseau est nécessaire. Dans ce cas, les noeuds communiquent en transmettant des paquets par le biais d'un protocole de routage.

On connaît actuellement divers protocoles de routage dans des réseaux ad hoc qui peuvent être classés en deux grandes catégories.

D'une part, les protocoles dits proactifs qui maintiennent en permanence des routes pour toutes les destinations du réseau. Les routes sont donc immédiatement disponibles dès qu'un noeud désire envoyer des données. On peut citer parmi les protocoles proactifs OLSR (« Optimized Link-State Routing ») et TBRPF (« Topology Dissemination Based on Reverse Path Forwarding »).

D'autre part, les protocoles réactifs qui reposent sur un mécanisme de découverte de routes à la demande.

L'invention concerne plus spécifiquement un procédé de routage du type réactif.

Un premier protocole réactif connu est le protocole DSR (« Dynamic Source Routing ») qui utilise un modèle de routage dirigé par la source : lorsqu'une station du réseau émet des données, tous les paquets contiennent la liste de tous les sauts intermédiaires qui composent la route vers la destination. La route utilisée pour transférer les données est donc imposée par la source. Au niveau du routage, le protocole peut être décomposée en deux phases : la découverte des routes et la maintenance des routes.

Un deuxième protocole réactif connu sous le nom de AODV (« Ad hoc On-demand Distance Vector Routing ») est décrit dans Ad hoc On-demand Distance Vector (AODV) Routing, Charles E. Perkins, Elizabeth M. Belding-Royer and Samir Das, Internet Request For Comments RFC 3561, Internet Engineering Task Force, July 2003. Le protocole AODV se distingue du protocole DSR par l'utilisation de mécanismes différents de découverte et de maintenance des routes. De plus, AODV n'utilise pas de routage dirigé par la source.

Les mécanismes utilisés par l'invention sont similaires à ceux du protocole AODV.

La découverte des routes avec AODV se base sur l'envoi d'une requête de route (« Route Request » ou RREQ) suivie par la réception d'une réponse de route (« Route Reply » ou RREP). Cependant, et contrairement au protocole DSR, la requête de route ne contient pas la liste des sauts intermédiaires. Avec AODV, chaque noeud intermédiaire retransmettant une requête de route mémorise l'adresse du noeud dont il a reçu la requête. AODV introduit également l'utilisation de numéros de séquence qui permettent d'éviter la formation de boucles de routage et aux noeuds de connaître l'état de fraîcheur des routes, c'est-à-dire leur validité potentielle.

Lorsque la requête atteint la destination ou un noeud ayant une route récente pour la destination, une réponse de route est envoyée de proche en proche à l'initiateur de la requête. Chaque noeud retransmet ainsi la réponse de route au noeud par lequel il a reçu la requête correspondante. Tous les noeuds sur le chemin emprunté par la réponse de route créent alors une entrée dans leur table de routage pour la destination visée en spécifiant comme prochain saut l'adresse du noeud leur ayant envoyé la réponse de route. Contrairement à DSR, le protocole AODV ne nécessite pas l'existence d'une route entre la source et la destination. Par contre, le mécanisme de découverte de routes dans AODV nécessite la présence de liens bidirectionnels entre tous les noeuds du réseau ad hoc.

Concernant la maintenance des routes, AODV repose sur l'aptitude des noeuds du réseau à détecter la rupture de liens. Cette détection est locale, chaque noeud vérifie si le prochain saut utilisé pour retransmettre un paquet est disponible ou non. AODV s'appuie sur un mécanisme de découverte de voisins basé sur l'envoi périodique de messages de découverte de voisinage appelé HELLO, permettant à chaque noeud de connaître ses voisins. La réception d'un tel message indique en effet à un noeud que le lien entre lui-même et l'émetteur du message est actif. De plus, afin d'éviter de surcharger le réseau, seuls les noeuds ayant des routes actives envoient des messages HELLO. Si un noeud détecte une rupture de lien, il envoie un message d'erreur (« Route Error ») à tous ses voisins utilisant des routes dont fait partie le lien rompu. Chaque noeud maintient donc une table contenant la liste de ceux de ses voisins qui l'utilisent comme prochain saut pour certaines destinations.

Actuellement, les contraintes liées essentiellement à la mobilité et à la communication radio n'ont pas permis de proposer de solutions aux applications temps réel et multimédia sur les réseaux ad hoc concernant les garanties sur la qualité de service QoS et la disponibilité des ressources du réseau.

On rappelle que le terme de qualité de service dans le domaine des réseaux de communication désigne tout mécanisme permettant d'adapter le comportement d'un réseau aux besoins des applications. Cette notion englobe les mécanismes permettant d'allouer des ressources du réseau à un flux de données et de lui garantir, par exemple, une bande passante donnée, un délai de bout en bout borné, une gigue réduite, un taux de pertes limité, etc. Si le réseau est incapable d'assurer ce niveau de service, il est alors chargé d'en avertir l'application qui l'a demandé.

Aucun des protocoles de routage réactifs qui viennent d'être présentés n'offrent de mécanisme susceptible de garantir la qualité de service. Les données sont alors envoyées au mieux, sans prise en compte des paramètres de QoS, selon le principe du « meilleur effort ».

On peut citer néanmoins une prise en compte de la qualité de service par le protocole réactif AQOR (« Ad hoc QoS On-demand Routing ») décrit dans Ad hoc QoS on-demand routing (AQOR) in mobile ad hoc networks, Q. Xue and A. Ganz, Journal of parallel and distributed Computing, vol. 63, issue 2, pp.154-165, February 2003.

Ce protocole propose notamment un mécanisme de réservation de bande passante dont le fonctionnement est similaire à un protocole de signalisation, les fonctionnalités de signal étant utilisées pour la réservation des ressources et la maintenance des routes. Cependant, le calcul de bande passante impliqué est complexe et coûteux et les échanges de nombreux messages de signalisation alourdissent considérablement le réseau.

Aussi, un problème technique à résoudre par l'objet de la présente invention est de proposer un procédé de routage dans un réseau ad hoc entre un noeud-source et un noeud-destinataire qui permettrait, de manière simple, peu coûteuse et sans sollicitation excessive du réseau, de garantir la qualité de service de bout en bout et de réserver les ressources disponibles correspondantes.

La solution au problème technique posé consiste, selon la présente invention, en ce que, pour garantir un niveau de qualité de service demandé entre le noeud-source et le noeud-destinataire, ledit procédé comprend les étapes consistant à :

- dans une étape préalable,

  * évaluer en chaque noeud du réseau un niveau de qualité de service pour chaque lien entre ledit noeud et les noeuds voisins,
  * établir une fonction de coût représentative du coût en ressources nécessaire pour garantir un niveau de qualité de service donné sur un lien entre un noeud et chacun des noeuds voisins,

- pour le noeud-source, émettre une requête de route sur le réseau, ladite requête contenant au moins ledit niveau de qualité de service demandé et au moins une valeur initiale de ladite fonction de coût,
- puis, pour un noeud récepteur d'une requête de route émise par un noeud voisin,

  * refuser ladite requête si ledit noeud n'est pas apte à garantir ledit niveau de qualité de service demandé,
  * émettre une requête de route sur le réseau, ladite requête contenant au moins ledit niveau de qualité de service demandé et une valeur de ladite fonction de coût cumulant ladite valeur de la fonction de coût reçue d'un noeud voisin précédent et une valeur de la fonction de coût calculée sur un lien avec un noeud voisin,

- pour le noeud-destinataire, émettre une réponse de route de proche en proche vers le noeud-source contenant au moins la valeur cumulée de ladite fonction de coût correspondant à au moins une route formée par des liens successifs entre le noeud-source) et le noeud-destinataire,
- pour le noeud-source, choisir la route entre le noeud-source et le noeud-destinataire présentant la meilleure fonction de coût cumulée.

Au sens de l'invention, le terme de « qualité de service évaluée en un noeud du réseau pour chaque lien entre ledit noeud et les noeuds voisins » inclut la qualité de service propre au noeud considéré et la qualité de service sur le lien considéré.

Ainsi, le procédé de routage conforme à l'invention est de type réactif, c'est-à-dire que les routes sont recherchées à la demande du noeud-source, et repose sur un mécanisme de contrôle d'admission des liens excluant le recours à un protocole de signalisation de bout en bout qui généralement alourdit et surcharge le réseau. Les ressources de qualité de service sont évaluées a priori à chaque noeud. Par conséquent, lors de la recherche de routes, seuls les noeuds qui supportent le niveau de qualité de service demandé retransmettront la requête de route. Le choix de la route définitive est effectué en final par le noeud-source à partir des valeurs de la fonction de coût globale calculées pour toutes les routes admissibles entre le noeud-source et le noeud-destinataire, la route retenue étant généralement celle pour laquelle la valeur de la fonction de coût globale est la plus faible.

Un autre problème technique pour lequel la présente invention offre une solution avantageuse concerne l'évaluation des ressources entre un noeud et un noeud voisin.

L'invention propose en effet que, pour chaque noeud du réseau, le niveau de qualité de service sur chaque lien entre ledit noeud et les noeuds voisins est évalué au moyen d'un message de découverte de voisinage.

Cette nouvelle technique d'estimation de ressources pour chaque noeud, entre ledit noeud et les noeuds voisins, peut être mise en oeuvre au moyen de deux mécanismes, le premier combinant les fonctionnalités du standard IEEE 802.11 pour estimer la bande passante résiduelle et le deuxième utilisant la valeur du temps RTT (« Round Trip Time ») pour évaluer le délai entre deux noeuds voisins.

On réalise ainsi une estimation de ressources extrêmement simple, beaucoup moins complexe et coûteuse que le mécanisme mis en oeuvre par le protocole AQOR décrit plus haut.

Le message de découverte de voisinage permet à un noeud de connaître ses noeuds voisins. Ce message peut être le message HELLO contenant au moins l'adresse du noeud émetteur.

Selon un mode de réalisation, ledit niveau de qualité de service est évalué en fonction de la bande passante dudit lien. Dans ce cas, la fonction $F_b$ de coût associée à la bande passante est donnée par :

$$F_b = B/[B_{max} - (B_{res} + B)]$$

où B est la bande passante à garantir, $B_{max}$ la bande passante maximale sur ledit lien et $B_{res}$ la bande passante résiduelle.

Selon un autre mode de réalisation, ledit niveau de qualité de service est évalué en fonction du délai sur ledit lien. Dans ce cas, la fonction $F_d$ de coût associée au délai est donnée par :

$$F_d = D/[D_{max} - (\sum_{i\,à\,j} D_i + D)]$$

où D est le délai sur ledit lien, $D_{max}$ le délai total maximum supporté et $\sum_{i\,à\,j} D_i$ la somme des délais cumulés sur les liens i à j déjà traversés.

Si l'on cumule bande passante et délai, ladite fonction de coût est une somme pondérée des fonctions de coût $F_b$ et $F_d$, appelées alors fonction de coût élémentaires.

Selon l'invention, un noeud apte à recevoir une pluralité de requêtes de route émet une requête de route contenant une valeur de ladite fonction de coût cumulant la valeur de la fonction de coût contenue dans une requête de route reçue en premier lieu d'un noeud voisin précédent et une valeur de la fonction de coût calculée sur un lien avec un noeud voisin.

Selon un aspect de l'invention, une requête de route reçue par le noeud contient une valeur de ladite fonction de coût cumulant ladite valeur de la fonction de coût reçue d'un noeud voisin précédent et une valeur de la fonction de coût calculée sur un lien avec ledit noeud voisin précédent.

Selon un autre aspect de l'invention, la requête de route contient une valeur de ladite fonction de coût cumulant ladite valeur de la fonction de coût reçue d'un noeud voisin précédent et une valeur de la fonction de coût calculée sur un lien avec un noeud voisin suivant.

La description qui va suivre en regard du dessin annexé, donné à titre d'exemple non limitatif, fera bien comprendre en quoi consiste l'invention et comment elle peut être réalisée.

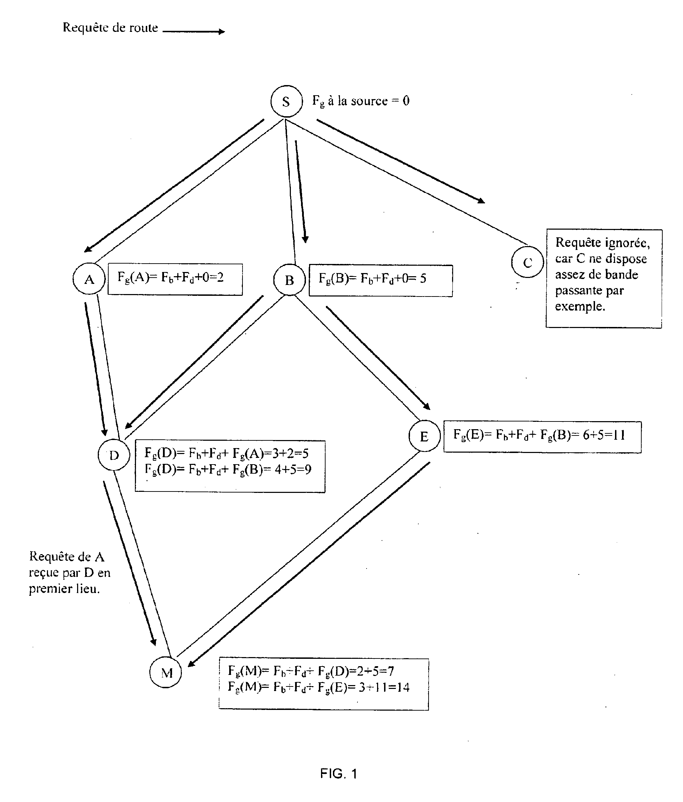

La figure 1 représente un ensemble de noeuds dans un réseau ad hoc.

Dans le cadre de protocoles réactifs à la demande, tels que le protocole AODV décrit ci-dessus, le procédé de routage selon l'invention a pour but de fournir des mécanismes simples permettant, d'une part, d'évaluer en chaque noeud du réseau les ressources disponibles et, d'autre part, de déterminer la meilleure route entre un noeud-source S et un noeud-destinataire M garantissant de bout en bout un niveau de qualité de service QoS demandé et de réserver au niveau de chaque noeud les ressources nécessaires.

Le procédé conforme à l'invention se base sur la notion de fonction de coût associée à une ou plusieurs métriques définissant la qualité de service. Il existe un certains nombre de telles métriques, comme la bande passante, le délai, la gigue, le taux d'erreur, l'énergie, etc. Pour éclaircir et simplifier cette approche, deux métriques élémentaires seront prises en compte ici, à savoir la bande passante et le délai. Bien entendu, l'invention s'étend sans difficulté à toute autre métrique.

A la bande passante est associée une fonction de coût élémentaire, notée $F_b$, tandis que la fonction de coût élémentaire associée au délai est notée $F_d$. La fonction de coût globale $F_g$ est la somme éventuellement pondérée des fonctions élémentaires $F_b$ et $F_d$.

Un exemple de fonction $F_b$ est donné par l'expression :

$$F_b = B/[B_{max} - (B_{res} + B)]$$

où $B_{max}$ représente la bande passante maximale offerte par le dispositif de communication sur le lien entre un noeud et un noeud voisin, B est la bande passante demandée et $B_{res}$ la bande passante résiduelle correspondant à la bande passante restante.

On notera que cette fonction présente un comportement hyperbolique avec des valeurs faibles lorsque la bande passante demandée B est faible, mais très grande lorsqu'elle s'approche de la bande passante disponible restante.

Pour qu'un lien soit validé du point de vue de la bande passante, l'inégalité suivante doit être vérifiée :

$$B_{res} + B < B_{max} \qquad (1)$$

De même, la fonctions de coût élémentaire $F_d$ peut être définie par :

$$F_d = D/[D_{max} - (\textstyle\sum_{i \text{ à } j} D_i + D)]$$

où D est le délai estimé sur le lien entre un noeud et un noeud voisin, $D_{max}$ le délai maximum supporté, et $\sum_{i \text{ à } j} D_i$ la somme des délais cumulés des noeuds déjà traversés.

Cette fonction présente également un comportement hyperbolique analogue à celui de la fonction $F_b$.

Un lien est considéré comme valide du point de vue du délai si :

$$\textstyle\sum_{i \text{ à } j} D_i + D < D_{max} \qquad (2)$$

La fonction de coût globale $F_g$ vaut alors :

$$F_g = \alpha F_b + \beta F_d$$

où $\alpha$ et $\beta$ sont des coefficients de pondération.

Pour garantir un niveau de qualité de service QoS demandé dans le réseau ad hoc, il est nécessaire d'estimer la bande passante disponible et le délai entre un noeud et un noeud voisin.

A cet effet, le procédé de l'invention propose de mettre à profit le message de découverte de voisinage, comme le message HELLO utilisé notamment dans le protocole de routage AODV.

La bande passante résiduelle $B_{res}$ peut être estimée en chaque noeud à partir de la sous-couche MAC (« Medium Access Control ») du standard IEEE 802.11, lequel fournit un mode optionnel d'échange de paquets de contrôle appelés RTS (« Request To Send ») et CTS (« Clear To Send »). Avant de transmettre des données un noeud envoie un paquet de contrôle RTS à destination des autres noeuds du réseau. Tous les noeuds mobiles à portée de communication du noeud émetteur qui reçoivent ce paquet RTS savent qu'une communication va avoir lieu. Comme la durée de la communication est précisée dans le paquet RTS, ces noeuds mobiles peuvent alors s'abstenir d'émettre pendant toute cette période. Cette opération est réalisée grâce au vecteur NAV (« Network Allocation Vector ») qui stocke la valeur de cette durée et joue le rôle d'horloge. Le noeud qui reçoit le paquet RTS renvoie un paquet de contrôle CTS s'il n'est pas lui-même bloqué par son vecteur NAV. Le paquet CTS a le même effet que le paquet RTS pour les noeuds mobiles à portée de communication du noeud récepteur. A la réception du paquet CTS, le noeud émetteur sait que le médium a été réservé et qu'il peut donc émettre ses données.

En se basant sur le mode de fonctionnement du standard IEEE 802.11, chaque noeud mobile peut déterminer les temps libres et occupés sur le canal afin d'estimer sa bande passante résiduelle $B_{res}$. En effet, le canal est dit libre si :

- la valeur du vecteur NAV est inférieure à la valeur du temps actuel,
- l'état « réception » est libre,
- l'état « envoi » est libre.

Par contre, le canal est dit occupé si :

- le vecteur NAV remet une nouvelle valeur,
- l'état « réception » passe de libre à un autre état,
- l'état « envoi » passe de libre à un autre état.

Par conséquent, un noeud estime la bande passante résiduelle par le rapport entre les temps libres et la somme des temps occupés et libres :

$$B_{res} = \frac{\sum libre}{\sum (libre + occup\acute{e})}.$$

Dans ce contexte, la bande passante $B_{max}$ est alors la bande passante offerte par le standard IEEE 802.11.

Le délai peut être estimé à partir de la mesure du temps séparant l'émission d'un message HELLO par un noeud et la réception par ce même noeud d'un message de réponse émis par un noeud voisin. Ce délai est peut être pris égal à un temps RTT divisé par deux.

Il convient de rappeler que cette technique d'estimation de ressources s'écarte par sa simplicité de celles mettant en oeuvre notamment des mécanismes de signalisation lourds et coûteux en termes de charge du réseau.

A partir d'un niveau de qualité de service QoS demandé pour la route recherchée entre les noeuds source S et destinataire M, défini dans l'exemple traité ici par une valeur B de bande passante et une valeur D de délai, le noeud-source S de la figure 1 émet en premier lieu un message du type HELLO pour découvrir l'ensemble des noeuds voisins.

Puis, afin d'établir une route vers le noeud-destinataire M, le noeud-source S émet en mode multidiffusion (« broadcast ») une requête de route vers les noeuds voisins. Cette requête contient au moins l'adresse du noeud-destinataire, le niveau de qualité de service demandé, une valeur initiale de la fonction de coût globale, prise égale à zéro, et un numéro de séquence afin de maintenir la cohérence des informations de routage. En effet, à cause de la mobilité des noeuds, les routes changent fréquemment, ce qui rend invalides les informations de routage détenues par certains noeuds. La notion de numéro de séquence résout ce problème en permettant de choisir les routes les plus nouvelles (« fresh routes »).

Chaque noeud voisin recevant la requête de route prend en compte ses ressources locales pour répondre à la qualité de service QoS demandée, appliquer le contrôle d'admission. Si le contrôle est positif, la requête de route est retransmise également en « broadcast » vers les autres noeuds voisins. Dans le cas contraire, la requête reçue est ignorée, comme par exemple pour le noeud C de la figure 1.

Par contre, les noeuds A et B supportent la qualité de service demandée. Ils réservent donc les ressources disponibles et mettent à jour la valeur de la fonction $F_g$ de coût globale la somme des valeurs des fonctions locales $F_b$ et $F_d$ :

$$F_g(A) = (F_b + F_d) + F_g(S) = 2 + 0 = 2 \quad (2)$$

$$F_g(B) = (F_b + F_d) + F_g(S) = 5 + 0 = 5 \quad (1)$$

où $F_b$ et $F_d$ correspondent aux fonctions élémentaires locales de chaque noeud, avec $(F_b + F_d) = 2$ au noeud A et $(F_b + F_d) = 5$ au noeud B. Bien entendu, ces valeurs numériques sont données uniquement à titre d'exemples. $F_g(S)$ est la valeur de la fonction de coût globale fournie par le noeud-source S, cette valeur initiale est prise égale à zéro.

A leur tour, les noeuds A et B retransmettent en mode « broadcast » la requête de route vers les autres noeuds voisins. Quand les noeuds D et E reçoivent cette requête, ils répètent la même procédure que pour les noeuds A et B.

On remarque dans l'exemple de la figure 1 que le noeud D reçoit deux requêtes de route l'une provenant du noeud A, l'autre du noeud B. Afin d'alléger la charge des messages de contrôle dans lé réseau, il est convenu que le noeud D ne retransmette que la requête reçue en premier lieu, celle provenant du noeud A par exemple.

Le noeud-destinataire M reçoit finalement deux valeurs cumulées de la fonction de coût globale :

$$F_g(M) = (F_b + F_d) + F_g(D) = 2 + 5 = 7$$

$$F_g(M) = (F_b + F_d) + F_g(E) = 3 + 11 = 14$$

Ces valeurs sont remontées au moyen d'un message de réponse (« Route Reply ») émis par le noeud-destinataire M. Ce message transite de proche en proche jusqu'au noeud-source S. Il contient, en plus de la valeur de la fonction de coût globale, l'adresse du prochain noeud voisin et un numéro de séquence.

Le noeud D contient dans sa table de routage, d'une part, les deux valeurs de la fonction Fg reçues de A et B dans deux requêtes de route différentes, mais correspondant à la même destination avec le même niveau de qualité de service QoS demandé, et d'autre part, une valeur de la fonction Fg reçue du noeud-destinataire M dans le message « Route Reply ».

Le noeud D transmet la valeur de la fonction Fg telle qu'il la reçoit du noeud M au noeud, ici le noeud A, dont la requête de route avait été reçue en premier lieu par le noeud D.

S'agissant du noeud, ici le noeud B, dont la requête de route avait été reçue en deuxième lieu par le noeud D, celui-ci extrait, par soustraction, la différence entre la valeur de la fonction $F_g$ qu'il avait envoyée au noeud M et celle qu'il a reçue en retour du même noeud M. Le noeud D ajoute cette différence à la valeur de la fonction $F_g$ qu'il n'avait pas transmise et transmet le message « Route Reply » vers le noeud correspondant, ici le noeud B.

Dans l'exemple de la figure 1, le noeud D reçoit dans un premier temps de la part du noeud A une requête de route vers le noeud-destinataire M contenant la valeur Fg(A) = 2.

Il reçoit ensuite de la part de B une requête de route vers M contenant la valeur $F_g$(B) = 5.

Dans ce cas, D rediffuse la requête de route vers M, mais avec une valeur $F_g$(D) cumulant la valeur Fg(A) reçue en premier lieu et la valeur locale ($F_b + F_d$). La valeur $F_g$(D) transmise à M est donc : $F_g$(D) = $F_b + F_d$ + Fg(A) = 3 +2=5.

Lorsque le noeud D reçoit dans le message de réponse du noeud M la valeur Fg(M) = 7 Il retransmet vers le noeud A cette valeur de Fg telle qu'elle est, à savoir 7. Par contre, pour la réponse qui sera émise au noeud B, D déduit de Fg(M) la valeur Fg(D) émise, c'est-à-dire :

$$F_g(M) - F_g(D) = 7 - 5 = 2.$$

Cette différence de 2 sera ajoutée aux autres requêtes enregistrées au niveau du noeud D, et qui cherchaient à atteindre M avec la même qualité de service QoS.

Lorsque la source S a reçu toutes les réponses, elle choisit la meilleure route parmi toutes les routes possibles en fonction des valeurs de la fonction de coût globale. La route finale est en général celle pour laquelle la valeur cumulée de la fonction de coût globale est la plus faible. Dans l'exemple de la figure 1, la fonction de coût globale totale la plus faible est celle de la route SA-D-M avec une valeur de 7 contre 11 pour la route S-B-D-M et 14 pour la route S-B-E-M.

Si un noeud détecte une rupture de lien, il alerte tous les noeuds voisins par un message d'erreur (« Route Error ») afin de libérer les ressources réservées et d'avertir le noeud-source S. Simultanément, chaque noeud réévalue sa fonction de coût globale en la réduisant du coût du lien avec le noeud invalidé. Par exemple, si le lien est rompu entre les noeuds B et E de la figure 1, la valeur Fg(B) est déduite de la fonction de coût globale en E qui valait initialement $F_g$(B) + ($F_b + F_d$), de même pour B qui déduira la fonction $F_g$(S) de sa fonction globale qui valait $F_g$(S) + ($F_b + F_d$), sachant que $F_g$(S)= 0.

Les autres noeuds se trouvant sur la route entre la source et la destination et qui n'ont pas été prévenus de la rupture de lien, attendent une durée déterminée TTL (« Time To Live »), si aucun paquet n'est arrivé, alors ils libèrent automatiquement leurs ressources.

Enfin, lorsqu'une route est établie à la suite de la mise en oeuvre du procédé de routage qui vient d'être décrit, seuls les noeuds se trouvant sur cette route continuent à envoyer des messages de découverte de voisinage du type HELLO afin de réduire la charge du réseau.

On remarquera que, dans l'exemple décrit sur la figure 1, le cumul par un noeud de la fonction de coût est effectué en additionnant la valeur de la fonction de coût reçue d'un voisin précédent et la fonction de coût sur le lien entre le noeud considéré et le même noeud voisin précédent, ce qui justifie la valeur initiale nulle. On pourrait cependant effectuer le cumul en additionnant la valeur de la fonction de coût reçue d'un voisin précédent et la fonction de coût sur le lien entre le noeud considéré et le noeud voisin suivant. Dans ce cas, la valeur initiale fournie par le noeud-source de la fonction de coût serait différente de zéro.

## Revendications

1. Procédé de routage dans un réseau ad hoc entre un noeud-source (S) et un noeud-destinataire (M), pour garantir un niveau de qualité de service demandé entre le noeud-source et le noeud-destinataire, ledit procédé comprenant les étapes consistant à :

   - dans une étape préalable,

      * évaluer en chaque noeud du réseau un niveau de qualité de service pour chaque lien entre ledit noeud et les noeuds voisins,
      * établir une fonction ($F_g$) de coût représentative du coût en ressources nécessaires pour garantir un niveau de qualité de service donné sur un lien entre un noeud et chacun des noeuds voisins,

   - pour le noeud-source (S), émettre une requête de route sur le réseau, ladite requête contenant au moins ledit niveau de qualité de service demandé et au moins une valeur initiale de ladite fonction ($F_g$) de coût,
   - puis, pour un noeud récepteur d'une requête de route émise par un noeud voisin,

      * refuser ladite requête si ledit noeud n'est pas apte à garantir ledit niveau de qualité de service demandé,
      * émettre une requête de route sur le réseau, ladite requête contenant au moins ledit niveau de qualité de service demandé et une valeur de ladite fonction de coût cumulant ladite valeur de la fonction de coût reçue d'un noeud voisin précédent et une valeur de la fonction de coût calculée sur un lien avec un noeud voisin,

   - pour le noeud-destinataire (M), émettre une réponse de route de proche en proche vers le noeud-source (S) contenant au moins la valeur cumulée de ladite fonction ($F_g$) de coût correspondant à au moins une route formée par des liens successifs entre le noeud-source (S) et le noeud-destinataire (M),
   - pour le noeud-source, choisir la route entre le noeud-source (S) et le noeud-destinataire (M) présentant la meilleure fonction de coût cumulée, **caractérisé en ce que** :
   - le niveau de qualité de service sur chaque lien entre ledit noeud et les noeuds voisins est évalué au moyen d'un message de découverte de voisinage; et
   - le niveau de qualité de service sur chaque lien entre ledit noeud et les noeuds voisins est évalué en fonction de la bande passante sur le lien et du délai de transmission sur le lien;

   et **en ce que** ledit délai est évalué à partir de la mesure du temps séparant l'émission d'un message du message de découverte de voisinage par un noeud et la réception par ce même noeud d'un message de réponse émis par un noeud voisin.

2. Procédé selon la revendication 1, **caractérisé en ce que** la fonction $F_b$ de coût associée à la bande passante est donnée par :

$$F_b = B/[B_{max} - (B_{res} + B)]$$

   où B est la bande passante demandée, $B_{max}$ la bande passante maximale sur ledit lien et $B_{res}$ la bande passante résiduelle.

3. Procédé selon la revendication 2, **caractérisé en ce que** ladite bande passante résiduelle est estimée à partir des temps libres et des temps d'occupation entre deux noeuds.

4. Procédé selon la revendication 3, **caractérisé en ce que** lesdits temps libres et lesdits temps d'occupation sont fournis au moyen du standard IEEE 802.11.

5. Procédé selon la revendication 1, **caractérisé en ce que** la fonction $F_d$ de coût associée au délai est donnée par :

$$F_d = D/[D_{max} - (\sum_{i\,à\,j} D_i + D)]$$

où D est le délai sur ledit lien, $D_{max}$ le délai total maximum supporté et $\sum_{i\,a\,j} D_i$ la somme des délais cumulés sur les liens i à j déjà traversés.

6. Procédé selon les revendications 2 et 5, **caractérisé en ce que** la fonction de coût est une somme pondérée des fonctions de coût $F_b$ et $F_d$.

**Claims**

1. Method of routing in an ad hoc network between a source node (S) and an addressee node (M), so as to guarantee a required level of quality of service between the source node and the addressee node, the said method comprising the steps consisting in:

   - in a prior step,

      * evaluating in each node of the network a level of quality of service for each link between the said node and the neighbour nodes,
      * establishing a cost function ($F_g$) representative of the cost in resources necessary for guaranteeing a given level of quality of service on a link between a node and each of the neighbour nodes,

   - for the source node (S), sending a route request over the network, the said request containing at least the said required level of quality of service and at least one initial value of the said cost function ($F_g$),
   - and then, for a node receiving a route request sent by a neighbour node,

      * denying the said request if the said node is not able to guarantee the said required level of quality of service,
      * sending a route request over the network, the said request containing at least the said required level of quality of service and a value of the said cost function aggregating the said value of the cost function received from a previous neighbour node and a value of the cost function calculated on a link with a neighbour node,

   - for the addressee node (M), sending a route response gradually towards the source node (S) containing at least the aggregated value of the said cost function ($F_g$) corresponding to at least one route formed by successive links between the source node (S) and the addressee node (M),
   - for the source node, choosing the route between the source node (S) and the addressee node (M) exhibiting the best aggregated cost function, **characterized in that**:
   - the level of quality of service on each link between the said node and the neighbour nodes is evaluated by means of a neighbourhood discovery message; and
   - the level of quality of service on each link between the said node and the neighbour nodes is evaluated as a function of the bandwidth on the link and of the transmission lag on the link;

   and **in that** the said lag is evaluated on the basis of the measurement of the time separating the sending of a message of the neighbourhood discovery message by a node and the receiving by this same node of a response message sent by a neighbour node.

2. Method according to Claim 1, **characterized in that** the cost function $F_b$ associated with the bandwidth is given by:

$$F_b = B/[B_{max} - (B_{res} + B)]$$

where B is the required bandwidth, $B_{max}$ the maximum bandwidth on the said link and $B_{res}$ the residual bandwidth.

3. Method according to Claim 2, **characterized in that** the said residual bandwidth is estimated on the basis of the free times and of the occupancy times between two nodes.

4. Method according to Claim 3, **characterized in that** the said free times and the said occupancy times are provided by means of the IEEE 802.11 standard.

5. Method according to Claim 1, **characterized in that** the cost function $F_d$ associated with the lag is given by:

$$F_d = D/[D_{max} - (\Sigma_{i \text{ to } j} D_i + D)]$$

where D is the lag on the said link, $D_{max}$ the maximum total lag supported and $\Sigma_{i \text{ to } j} D_i$ the sum of the lags aggregated over the links i to j already traversed.

6. Method according to Claims 2 and 5, **characterized in that** the cost function is a weighted sum of the cost functions $F_b$ and $F_d$.

**Patentansprüche**

1. Routing-Verfahren in einem Ad-hoc-Netzwerk zwischen einem Quellenknoten (S) und einem Zielknoten (M), um ein gefordertes Dienstqualitätsniveau zwischen dem Quellenknoten und dem Zielknoten zu gewährleisten, wobei das Verfahren die Schritte enthält, die darin bestehen:

- in einem vorhergehenden Schritt,

• in jedem Knoten des Netzwerks ein Dienstqualitätsniveau für jedes Link zwischen dem Knoten und den benachbarten Knoten zu ermitteln,
• eine Kostenfunktion ($F_g$) zu erstellen, die für die Kosten von zur Gewährleistung eines gegebenen Dienstqualitätsniveaus auf einem Link zwischen einem Knoten und jedem der benachbarten Knoten notwendigen Ressourcen repräsentativ ist,

- für den Quellenknoten (S), Senden einer Routenanforderung im Netzwerk, wobei die Anforderung mindestens das geforderte Dienstqualitätsniveau und mindestens einen Anfangswert der Kostenfunktion ($F_g$) enthält,
- dann, für einen Empfangsknoten einer von einem benachbarten Knoten gesendeten Routenanforderung,

• Zurückweisen der Anforderung, wenn der Knoten das geforderte Dienstqualitätsniveau nicht gewährleisten kann,
• Senden einer Routenanforderung im Netzwerk, wobei die Anforderung mindestens das geforderte Dienstqualitätsniveau und einen Wert der Kostenfunktion enthält, der den Wert der von einem vorhergehenden benachbarten Knoten empfangenen Kostenfunktion und einen Wert der berechneten Kostenfunktion auf einem Link mit einem benachbarten Knoten kumuliert,

- für den Zielknoten (M), schrittweises Senden einer Routenantwort an den Quellenknoten (S), die mindestens den kumulierten Wert der Kostenfunktion ($F_g$) entsprechend mindestens einer Route enthält, die von aufeinanderfolgenden Links zwischen dem Quellenknoten (S) und dem Zielknoten (M) gebildet wird,
- für den Quellenknoten, Wählen der Route zwischen dem Quellenknoten (S) und dem Zielknoten (M), die die beste kumulierte Kostenfunktion aufweist,

**dadurch gekennzeichnet, dass**:

- das Dienstqualitätsniveau auf jedem Link zwischen dem Knoten und den benachbarten Knoten mittels einer Nachbarschaftsentdeckungs-Mitteilung ermittelt wird; und
- das Dienstqualitätsniveau auf jedem Link zwischen dem Knoten und den benachbarten Knoten in Abhängigkeit vom Durchlassband auf dem Link und der Übertragungsverzögerung auf dem Link ermittelt wird;

und dass die Verzögerung ausgehend von der Messung der Zeit ermittelt wird, die das Senden der Nachbarschaftsentdeckungs-Mitteilung durch einen Knoten und den Empfang durch diesen gleichen Knoten einer von einem benachbarten Knoten gesendeten Antwortmitteilung trennt.

2. Verfahren nach Anspruch 1, **dadurch gekennzeichnet, dass** die dem Durchlassband zugeordnete Kostenfunktion $F_b$ angegeben wird durch:

$$F_b = B/[B_{max} - (B_{res} + B)]$$

wobei B das geforderte Durchlassband, $B_{max}$ das maximale Durchlassband auf dem Link und $B_{res}$ das Restdurchlassband ist.

3. Verfahren nach Anspruch 2, **dadurch gekennzeichnet, dass** das Restdurchlassband ausgehend von den freien Zeiten und den Besetztzeiten zwischen zwei Knoten geschätzt wird.

4. Verfahren nach Anspruch 3, **dadurch gekennzeichnet, dass** die freien Zeiten und die Besetztzeiten mittels des Standards IEEE 802.11 geliefert werden.

5. Verfahren nach Anspruch 1, **dadurch gekennzeichnet, dass** die der Verzögerung zugeordnete Kostenfunktion $F_d$ angegeben wird durch:

$$F_d = D/[D_{max} - (\Sigma_{i \text{ bis } j} D_i + D)]$$

wobei D die Verzögerung auf dem Link, $D_{max}$ die maximale unterstützte Gesamtverzögerung und $\Sigma_{i \text{ bis } j} D_j$ die Summe der kumulierten Verzögerungen auf den Links i bis j ist, die bereits durchquert wurden.

6. Verfahren nach den Ansprüchen 2 und 5, **dadurch gekennzeichnet, dass** die Kostenfunktion eine gewichtete Summe der Kostenfunktionen $F_b$ und $F_d$ ist.

Requête de route ⟶

FIG. 1

## RÉFÉRENCES CITÉES DANS LA DESCRIPTION

**Littérature non-brevet citée dans la description**

- **Charles E. Perkins ; Elizabeth M. Belding-Royer ; Samir Das.** Ad hoc On-demand Distance Vector Routing. *Ad hoc On-demand Distance Vector (AODV) Routing,* Juillet 2003

- **Q. Xue ; A. Ganz.** Ad hoc QoS On-demand Routing. *Ad hoc QoS on-demand routing (AQOR) in mobile ad hoc networks,* Février 2003, vol. 63 (2), 154-165